# FASCICULE DE BREVET EUROPEEN

(11) **EP 3 864 056 B1**
(45) Date de publication et mention de la délivrance du brevet: **03.08.2022**
(21) Numéro de dépôt: 19813612.9
(22) Date de dépôt: 10.10.2019
(51) Int. Cl.: C08C 19/22, B60C 1/00, B60C 15/00, C08K 3/06, C08K 3/36

(54) **PNEUMATIQUE**
REIFEN
TYRE

(30) Priorité: 11.10.2018 FR 1859428
(43) Date de publication de la demande: 18.08.2021
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND Cedex 9 (FR); LEDOUX, Céline, 63040 CLERMONT-FERRAND Cedex 9 (FR)
(74) Mandataire: Gandon-Pain, Sylvie
(86) Numéro de dépôt international: PCT/FR2019/052405
(87) Numéro de publication internationale: WO 2020/074832

(56) Documents cités:
- WO-A1-2015/059271
- FR-A1- 2 943 680

## Description

Le domaine de la présente invention est celui des pneumatiques comprenant des composants caoutchouteux renforcés d'une silice, dépourvus d'élément de renfort filaire et n'étant au contact ni avec l'air ambiant, ni avec un gaz de gonflage.

Un pneumatique de manière connue comporte une bande de roulement, deux bourrelets inextensibles, deux flancs reliant les bourrelets à la bande de roulement, une armature de carcasse ancrée dans chaque bourrelet à un élément circonférentiel de renforcement de bourrelet et une ceinture disposée circonférentiellement entre l'armature de carcasse et la bande de roulement. Cette ceinture, dite armature de sommet, et l'armature de carcasse sont composées d'une ou plusieurs nappes de renforcement, couches de caoutchouc renforcées par des éléments de renforcement filaires ou renforts filaires tels que des câbles ou des monofilaments, par exemple métalliques ou textiles, les éléments de renforcement de chaque nappe étant noyés dans la composition de caoutchouc de la nappe et disposés pratiquement parallèlement les uns aux autres à l'intérieur de la nappe.

Au cours de leur usage dans le pneumatique, les composants caoutchouteux à base de polyisoprène et d'une silice renforçante sont sujets à un vieillissement par thermooxydation qui se traduit par une augmentation dans le temps des pertes hystérétiques. Le vieillissement par thermooxydation du composant caoutchouteux a pour conséquence de diminuer la durée de vie du composant caoutchouteux et celle du pneumatique.

La Demanderesse poursuivant ses efforts pour améliorer encore davantage la durée de vie d'un tel composant caoutchouteux et celle du pneumatique a découvert que l'utilisation d'un polyisoprène portant des fonctions imidazoles dans le composant caoutchouteux permet de résoudre le problème mentionné.

Ainsi, un premier objet de l'invention est un pneumatique comportant deux bourrelets destinés à entrer en contact avec une jante, un sommet composé d'au moins une armature de sommet et une bande de roulement, deux flancs reliant le sommet aux bourrelets, une armature de carcasse ancrée dans les deux bourrelets, lequel pneumatique comprend un composant caoutchouteux qui comprend une composition de caoutchouc à base d'un polyisoprène modifié, d'un système de vulcanisation et d'une charge renforçante, la charge renforçante comprenant une silice, le polyisoprène modifié étant un polyisoprène qui porte des fonctions imidazoles pendantes, le composant caoutchouteux étant dépourvu d'élément de renfort filaire, ne présentant pas de face visible lorsque le pneumatique n'est pas monté sur une jante externe, et n'étant pas destiné à entrer en contact direct avec une jante.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

L'abréviation "pce" signifie parties en poids pour cent parties d'élastomère de la composition de caoutchouc (du total des élastomères si plusieurs élastomères sont présents dans la composition de caoutchouc).

Le polyisoprène modifié utile aux besoins de l'invention qui est l'un des constituants essentiels de la composition de caoutchouc a pour caractéristique essentielle d'être un polyisoprène qui a des groupes pendants, lesquels groupes pendants contiennent des fonctions imidazoles. Les fonctions imidazoles portées par le polyisoprène sont de manière connue des cycles à 5 membres qui sont 3 atomes de carbone et 2 atomes d'azote. La fonction imidazole utile aux besoins de l'invention est un groupe imidazolyle, substitué ou non. Le groupe imidazolyle peut être un groupe benzimidazolyle. Les groupes imidazolyles peuvent être identiques ou différents selon leur substitution. Selon l'un quelconque des modes de réalisation de l'invention, y compris leurs variantes préférentielles, le cycle à 5 membres de la fonction imidazole est préférentiellement dépourvu de groupe NH, ce qui traduit qu'aucun des 2 atomes d'azote constituant le cycle n'est lié directement à un atome d'hydrogène, selon cette variante préférentielle.

Les fonctions imidazole sont de préférence des groupes pendants répartis de façon aléatoire sur le polyisoprène modifié, c'est-à-dire répartis de façon aléatoire le long de la chaîne polymère du polyisoprène modifié.

De préférence, le polyisoprène modifié contient des unités isoprène de configuration 1,4-cis qui représentent plus de 90% en mole des unités isoprène. De manière plus préférentielle, le polyisoprène modifié est un caoutchouc naturel modifié. Avantageusement, le polyisoprène modifié est différent d'un caoutchouc naturel époxydé.

De préférence, la fonction imidazole est un groupe de formule (I) dans laquelle le symbole Y₁ désigne un rattachement à une unité isoprène du polyisoprène modifié, le symbole Y₂ représente un atome d'hydrogène ou un alkyle ayant 1 à 6 atomes de carbone, les symboles Y₃ et Y₄ sont chacun un atome d'hydrogène. On entend par rattachement à une unité isoprène du polyisoprène modifié une liaison ou un groupe qui permet de relier de façon covalente le cycle à 5 membres de la fonction imidazole à la chaîne polyisoprène.

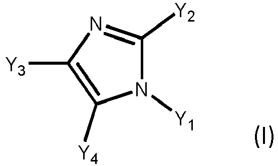

De préférence, le groupe alkyle représenté par Y₂ contient 1 à 3 atomes de carbone. Avantageusement, le groupe alkyle représenté par Y₂ est un méthyle.

De préférence, le taux de fonction imidazole dans le polyisoprène modifié utile aux besoins de l'invention est inférieur à 3% en mole des unités de répétition qui constituent le polyisoprène modifié. Il varie préférentiellement dans un domaine compris entre 0% et 3% en mole des unités de répétition du polyisoprène modifié, plus préférentiellement entre 0.02% et 2% en mole des unités de répétition du polyisoprène modifié, encore plus préférentiellement entre 0.07% et 0.7% en mole des unités de répétition du polyisoprène modifié.

De préférence, le polyisoprène modifié est un polyisoprène modifié par greffage d'un agent de modification sur un polyisoprène contenant plus de 90% en mole d'unité isoprène de configuration 1,4-cis, de préférence sur du caoutchouc naturel. En d'autre terme, selon ce mode, le polyisoprène modifié est obtenu par modification d'un polyisoprène contenant plus de 90% en mole d'unité isoprène de configuration 1,4-cis, la modification étant une réaction de greffage d'un composé dit agent de modification. De manière plus préférentielle, le polyisoprène modifié est un caoutchouc naturel modifié par greffage d'un agent de modification sur du caoutchouc naturel. En d'autre terme, selon cette variante préférentielle, le polyisoprène modifié est obtenu par modification du caoutchouc naturel, la modification étant une réaction de greffage d'un composé dit agent de modification.

De préférence, l'agent de modification est un composé qui contient une fonction imidazole et un groupe réactif vis-à-vis de doubles liaisons carbone carbone telles que des unités isoprène. Autrement dit, selon ce mode le polyisoprène modifié est obtenu par modification d'un polyisoprène, dit polyisoprène de départ, par une réaction de greffage de l'agent de modification sur des unités isoprène, ce qui se traduit par la présence dans le polyisoprène modifié d'unités isoprène non modifiées et des unités isoprène modifiées. Le polyisoprène de départ est de préférence du caoutchouc naturel.

De manière plus préférentielle, l'agent de modification est un composé 1,3-dipolaire qui est un monooxyde de nitrile aromatique, composé comprenant un noyau benzénique substitué par un dipôle oxyde de nitrile et substitué par un groupe contenant une fonction imidazole. Le terme composé 1,3-dipolaire est compris selon la définition donnée par IUPAC. Le composé 1,3-dipolaire a pour caractéristique de comprendre un dipôle, l'oxyde de nitrile, et la fonction imidazole. Le dipôle constitue le groupe réactif de l'agent de modification vis-à-vis de doubles liaisons carbone carbone. Le dipôle réagit typiquement avec les doubles liaisons carbone carbone d'unités isoprène, notamment par réaction de cycloaddition [3+2], comme illustrée ci-après.

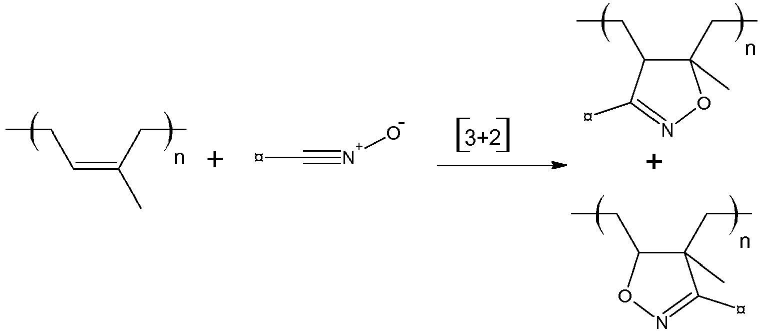

La mise en présence du polyisoprène de départ et de l'agent de modification conduit à la modification d'une partie des unités isoprène du polyisoprène de départ. Le composé 1,3-dipolaire utile aux besoins de l'invention est un monooxyde de nitrile aromatique, composé comprenant un noyau benzénique substitué par un dipôle oxyde de nitrile. On entend par composé monooxyde de nitrile aromatique un composé aromatique qui contient un seul dipôle oxyde de nitrile et dans lequel le noyau benzénique est substitué par le dipôle oxyde de nitrile, ce qui signifie que l'atome de carbone du dipôle est lié directement par une liaison covalente à un atome de carbone du noyau benzénique. Le noyau benzénique substitué par le dipôle oxyde de nitrile est aussi substitué par un groupe contenant la fonction imidazole. De préférence, le noyau benzénique est aussi substitué en ortho du dipôle.

Avantageusement, le composé 1,3-dipolaire contient un motif de formule (II) dans laquelle R₁ représente le dipôle oxyde de nitrile, un des symboles R₂ à R₆ représente un groupe saturé ayant 1 à 6 atomes de carbone et lié de façon covalente à l'un des atomes d'azote du cycle à 5 membres de la fonction imidazole, les autres symboles, identiques ou différents, représentant un atome d'hydrogène ou un substituant. Le substituant peut être tout groupe tant qu'il ne réagit pas avec le dipôle. Le substituant peut former avec le substituant du carbone voisin un cycle. De préférence, le substituant est un alkyle ayant 1 à 3 atomes de carbone, préférentiellement méthyle ou éthyle.

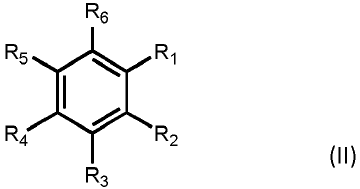

Le groupe saturé qui est lié de façon covalente à la fonction imidazole contient préférentiellement 1 à 3 atomes de carbone et peut contenir un hétéroatome. De préférence, le groupe saturé est un alcanediyle tel qu'un méthanediyle.

La synthèse du composé 1,3-dipolaire peut être réalisée à partir d'une voie de synthèse relativement aisée à partir d'un précurseur commercialement disponible, par exemple le mésitylène, comme cela est décrit notamment dans le document WO 2015059269.

Avantageusement, le composé 1,3-dipolaire est le composé 2,4,6-triméthyl-3-((2-méthyl-1*H*-imidazol-1-yl)méthyl)benzo-nitrile oxyde de formule (III-a) ou le composé 2,4,6-triéthyl-3-((2-méthyl-1*H*-imidazol-1-yl)méthyl)benzo-nitrile oxyde de formule (III-b), plus avantageusement le composé de formule (III-a).

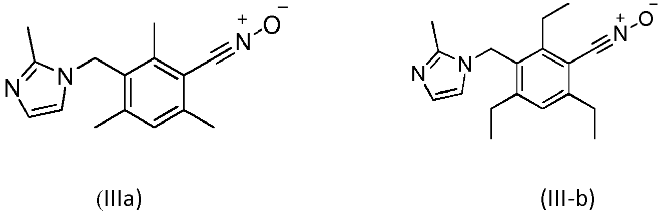

La composition de caoutchouc peut contenir outre le polyisoprène modifié utile aux besoins de l'invention un ou plusieurs autres élastomères diéniques. Par élastomère diénique, on entend un élastomère qui comprend des unités diéniques. Par unité diénique, on entend une unité qui contient une double liaison carbone carbone et qui résulte de l'insertion d'un monomère diène dans une chaîne en croissance au cours de la réaction de polymérisation. Lorsque la composition de caoutchouc comprend un élastomère diénique autre que le polyisoprène modifié utile aux besoins de l'invention, cet élastomère diénique, dit élastomère additionnel, est de préférence un polyisoprène, de manière plus préférentielle un polyisoprène non modifié. Selon l'un quelconque des modes de réalisation de l'invention, le polyisoprène modifié utile aux besoins de l'invention est présent dans la composition de caoutchouc à un taux préférentiellement supérieur à 50 pce, plus préférentiellement supérieur à 80 pce.

La composition de caoutchouc utile aux besoins de l'invention a aussi pour caractéristique essentielle de comprendre une charge renforçante qui comprend une silice. On entend par charge renforçante tout type de charge dite renforçante, connue pour ses capacités à renforcer une composition de caoutchouc utilisable pour la fabrication de pneumatiques. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La silice utilisée peut être toute silice renforçante connue de l'homme du métier capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.. La silice peut être toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387. L'état physique sous lequel se présente la silice est indifférent, que ce soit sous forme de poudre, de microperles, de granulés, ou encore de billes.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po :* 0.05 à 0.17). La surface spécifique CTAB est la surface externe déterminée selon la norme française NF T 45-007 de novembre 1987 (méthode B).

De préférence, la charge renforçante est majoritairement constituée de silice, c'est-à-dire que la proportion de silice est supérieure à 50% en poids du poids total de la charge renforçante. Autrement dit, selon ce mode la silice représente préférentiellement plus de 50% en masse de la charge renforçante.

De préférence, le taux de charge renforçante dans la composition de caoutchouc varie dans un domaine allant de 25 à 80 pce, plus préférentiellement de 30 à 70 pce, de manière très préférentielle de 35 à 60 pce, mieux de 40 à 55 pce. En dessous de 25 pce de charge, la composition pourrait être moins performante en rigidité en fonction de l'application souhaitée tandis qu'au-dessus de 80 pce de charge, la composition pourrait être moins performante en résistance au roulement. Le taux de silice est préférentiellement compris entre 25 et 80 pce, de préférence entre 30 et 70 pce, plus préférentiellement entre 35 et 60 pce, mieux entre 40 et 55 pce. Ces taux de silice renforçante peuvent s'appliquer à l'un quelconque des modes de l'invention.

On notera que la charge renforçante peut contenir, en plus de la silice, du noir de carbone. Le noir de carbone est alors préférentiellement présent selon une fraction pondérale inférieure à 50 % par rapport au poids total de la charge renforçante. Comme noirs de carbone conviennent tous les noirs de carbone, notamment les noirs conventionnellement utilisés dans les pneumatiques. Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce), encore plus préférentiellement inférieur à 5 pce. Dans les intervalles indiqués, on bénéficie des propriétés colorantes (agent de pigmentation noire) sans pénaliser par ailleurs les performances typiques apportées par la silice.

Pour coupler la silice à l'élastomère diénique, à savoir le polyisoprène modifié utile aux besoins de l'invention et le cas échéant un autre élastomère présent dans la composition de caoutchouc, on utilise de manière bien connue un agent de couplage, notamment un silane, (ou agent de liaison) au moins bifonctionnel destiné à assurer une connexion suffisante, de nature chimique et/ou physique, entre la silice (surface de ses particules) et l'élastomère diénique, en particulier des organosilanes ou des polyorganosiloxanes bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650). A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. Dans les compositions de caoutchouc de l'invention, la teneur en agent de couplage est préférentiellement comprise dans un domaine allant de 1 à 20 pce, plus préférentiellement de 2 à 16 pce et encore plus préférentiellement de 3 à 12 pce.

Une autre caractéristique essentielle de la composition de caoutchouc est de comprendre un système de vulcanisation, c'est-à-dire un système de réticulation à base de soufre ou d'un agent donneur de soufre. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. De préférence, le système de vulcanisation contient un taux de soufre inférieur ou égal à 4 pce, en particulier entre 0,1 et 4 pce, plus particulièrement entre 0,5 et 3 pce, encore plus particulièrement entre 1,5 et 2,5 pce.

De manière conventionnelle, le système de vulcanisation contient aussi un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

La composition de caoutchouc utile à l'invention peut comporter également tout ou partie des additifs usuels habituellement utilisés dans les compositions d'élastomères, comme par exemple des pigments, des agents de protection tels que cires anti-ozone, anti-ozonants chimiques, anti-oxydants, des agents anti-fatigue.

Le composant caoutchouteux utile à l'invention a pour autre caractéristique essentielle d'être dépourvu d'élément de renfort filaire. Il est rappelé qu'un élément de renfort filaire peut se présenter sous différentes formes, préférentiellement sous la forme d'un fil unitaire (monofil) ou d'un assemblage de fils, que ces fils soient tordus entre eux (par exemple, sous la forme d'un câble) ou essentiellement parallèles entre eux. Par « fil », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm. Sont donc exclus des composants du pneumatique selon l'invention toute armature de renforcement telle que l'armature de sommet et l'armature de carcasse.

Le composant caoutchouteux utile à l'invention a aussi pour autre caractéristique essentielle de ne pas présenter de face visible lorsque le pneumatique n'est pas monté sur une jante externe. Il a également pour caractéristique essentielle de ne pas être destiné à entrer en contact avec une jante, ce qui revient à dire que lorsque le pneumatique est monté sur une jante externe, le composant caoutchouteux n'entre pas en contact direct avec la jante. Il s'en suit qu'un tel composant n'est pas au contact de l'air ambiant, ni d'un gaz de gonflage. Sont donc aussi exclus des composants du pneumatique selon l'invention la bande de roulement, les flancs, la couche interne ou gomme intérieure ("inner liner").

Selon un mode de réalisation préférentiel, le composant caoutchouteux utile à l'invention est adjacent, en particulier attenant, à l'armature de carcasse ou à l'armature de sommet.

Selon un autre mode de réalisation préférentiel de l'invention, le composant caoutchouteux utile à l'invention est un insert annulaire interne présent dans chacun des bourrelets. Un insert annulaire a une section méridienne de forme générale allongée et présente des faces se joignant en une pointe ou extrémité (dite encore apex) qui est située radialement à l'extérieur de l'élément circonférentiel de renforcement de bourrelet. On entend par section méridienne une coupe par un plan méridien passant par l'axe de rotation du pneumatique. On entend par insert annulaire interne un insert annulaire qui ne présente pas de face visible lorsque le pneumatique n'est pas monté sur une jante externe, et qui n'entre pas en contact direct avec la jante.

Selon encore un autre mode de réalisation préférentiel de l'invention, le composant caoutchouteux utile à l'invention est un insert annulaire interne présent dans chacun des bourrelets et est adjacent, en particulier attenant, à l'armature de carcasse.

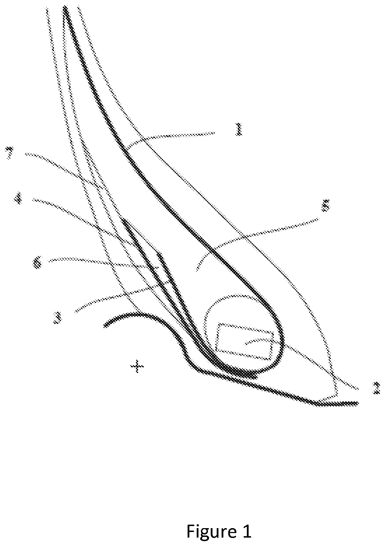

A titre d'exemple, la figure 1 représente de manière schématique dans sa coupe méridienne un bourrelet de pneumatique renforcé par un élément circonférentiel de renforcement (2) qui se présente sous la forme d'une tringle autour de laquelle s'enroule une armature de carcasse (1) pour former un retournement (3) disposé axialement vers l'extérieur de l'armature de carcasse. Avantageusement, en particulier dans le cas d'un pneumatique pour véhicule Poids-lourd, ce bourrelet peut comprendre en outre axialement vers l'extérieur du retournement de carcasse, une armature additionnelle de renforcement (4) telle que représentée dans la figure 1. Le bourrelet comprend aussi un insert annulaire interne (5) localisé axialement entre le retournement (3) et l'armature de carcasse (1), un insert annulaire interne (6) localisé axialement entre le retournement (3) et l'armature additionnelle de renforcement (4), un insert annulaire interne (7) localisé axialement à l'extérieur de l'armature additionnelle de renforcement (4).

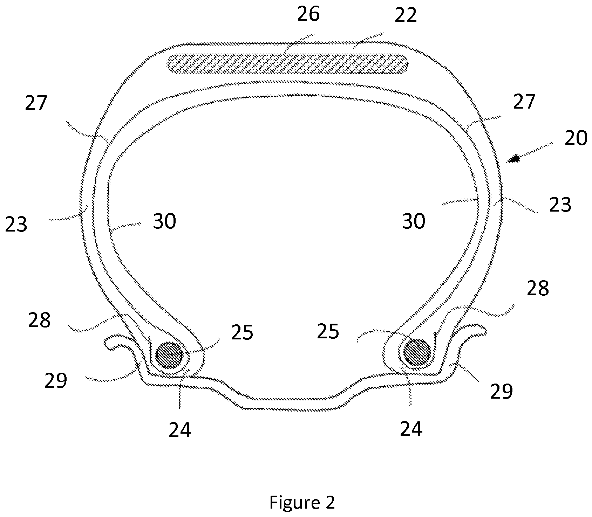

A titre d'exemple, la figure 2 représente de manière schématique une coupe radiale d'un pneumatique (20) à armature de carcasse radiale conforme à l'invention. Le pneumatique (20) comporte un sommet (22), deux flancs (23), deux bourrelets (24), une armature de carcasse (27) s'étendant d'un bourrelet à l'autre. Le sommet (22), surmonté d'une bande de roulement (non représentée sur cette figure schématique, pour simplification), est de manière connue en soi renforcé par une armature de sommet (26) constituée par exemple d'au moins deux nappes sommet croisées superposées (nappes sommet dites "de travail"). L'armature de carcasse (27) est enroulée autour des deux tringles (25) dans chaque bourrelet (24), le retournement (28) de cette armature (27) étant par exemple disposé vers l'extérieur du pneumatique (20) qui est ici représenté monté sur sa jante (29). L'armature de carcasse (27) est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets (24) et passe par le milieu de l'armature de sommet (26)). Bien entendu, ce pneumatique (20) comporte en outre de manière connue une couche de gomme ou élastomère (30), communément appelée gomme ou couche d'étanchéité, qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renforcement (non représentée sur la figure) qui est située entre la nappe de carcasse et la couche d'étanchéité.

La composition de caoutchouc est fabriquée typiquement dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de vulcanisation.

La composition de caoutchouc avant d'être réticulée est typiquement calandrée ou extrudée en vue de son utilisation comme composant caoutchouteux. Le composant caoutchouteux est un article semi-fini utilisé dans la confection d'un pneumatique.

En résumé, l'invention est mise en œuvre avantageusement selon l'un quelconque des modes suivants 1 à 32 :
Mode 1 : Pneumatique comportant deux bourrelets destinés à entrer en contact avec une jante, un sommet composé d'au moins une armature de sommet et une bande de roulement, deux flancs reliant le sommet aux bourrelets, une armature de carcasse ancrée dans les deux bourrelets, lequel pneumatique comprend un composant caoutchouteux qui comprend une composition de caoutchouc à base d'un polyisoprène modifié, d'un système de vulcanisation et d'une charge renforçante, la charge renforçante comprenant une silice, le polyisoprène modifié étant un polyisoprène qui porte des fonctions imidazoles pendantes, le composant caoutchouteux étant dépourvu d'élément de renfort filaire et ne présentant pas de face visible lorsque le pneumatique n'est pas monté sur une jante externe, et n'étant pas destiné à entrer en contact direct avec une jante.
Mode 2 : Pneumatique selon le mode 1 dans lequel la fonction imidazole est un groupe de formule (I) dans laquelle le symbole Y₁ désigne un rattachement à une unité isoprène du polyisoprène modifié, le symbole Y₂ représente un atome d'hydrogène ou un alkyle ayant 1 à 6 atomes de carbone, les symboles Y₃ et Y₄ sont chacun un atome d'hydrogène. 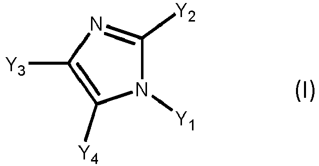
Mode 3 : Pneumatique selon le mode 2 dans lequel l'alkyle représenté par Y₂ contient 1 à 3 atomes de carbone.
Mode 4 : Pneumatique selon le mode 3 dans lequel le groupe alkyle représenté par Y₂ est un méthyle.
Mode 5 : Pneumatique selon l'un quelconque des modes 1 à 4 dans lequel le taux de fonction imidazole dans le polyisoprène modifié est inférieur à 3% en mole des unités de répétition qui constituent le polyisoprène modifié.
Mode 6 : Pneumatique selon le mode 5 dans lequel le taux de fonction imidazole dans le polyisoprène modifié est compris entre 0.02% et 2% en mole des unités de répétition du polyisoprène modifié.
Mode 7: Pneumatique selon le mode 6 dans lequel le taux de fonction imidazole dans le polyisoprène modifié est entre 0.07% et 0.7% en mole des unités de répétition du polyisoprène modifié.
Mode 8 : Pneumatique selon l'un quelconque des modes 1 à 7 dans lequel les fonctions imidazoles sont des groupes pendants répartis de façon aléatoire sur le polyisoprène modifié.
Mode 9 : Pneumatique selon l'un quelconque des modes 1 à 8 dans lequel le polyisoprène modifié contient des unités isoprène de configuration 1,4-cis qui représentent plus de 90% en mole des unités isoprène.
Mode 10 : Pneumatique selon l'un quelconque des modes 1 à 9 dans lequel le polyisoprène modifié est un caoutchouc naturel modifié.
Mode 11 : Pneumatique selon l'un quelconque des modes 1 à 10 dans lequel le polyisoprène modifié est différent d'un caoutchouc naturel époxydé.
Mode 12 : Pneumatique selon l'un quelconque des modes 1 à 11 dans lequel le polyisoprène modifié est un polyisoprène modifié par greffage d'un agent de modification sur un polyisoprène contenant plus de 90% en mole d'unité isoprène de configuration 1,4-cis.
Mode 13 : Pneumatique selon l'un quelconque des modes 1 à 12 dans lequel le polyisoprène modifié est un caoutchouc naturel modifié par greffage d'un agent de modification sur du caoutchouc naturel.
Mode 14 : Pneumatique selon le mode 12 ou le mode 13 dans lequel l'agent de modification est un composé qui contient une fonction imidazole et un groupe réactif vis-à-vis de doubles liaisons carbone carbone.
Mode 15 : Pneumatique selon l'un quelconque des modes 12 à 14 dans lequel l'agent de modification est un composé 1,3-dipolaire qui est un monooxyde de nitrile aromatique, composé comprenant un noyau benzénique substitué par un dipôle oxyde de nitrile et substitué par un groupe contenant une fonction imidazole.
Mode 16 : Pneumatique selon le mode 15 dans lequel le composé 1,3-dipolaire contient un motif de formule (II) dans laquelle R₁ représente le dipôle oxyde de nitrile, un des symboles R₂ à R₆ représente un groupe saturé ayant 1 à 6 atomes de carbone et lié de façon covalente à l'un des atomes d'azote du cycle à 5 membres de la fonction imidazole, les autres symboles, identiques ou différents, représentant un atome d'hydrogène ou un substituant. 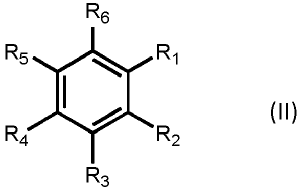
Mode 17 : Pneumatique selon le mode 16 dans lequel le groupe saturé contient 1 à 3 atomes de carbone.
Mode 18 : Pneumatique selon le mode 16 ou le mode 17 dans lequel le groupe saturé est un alcanediyle.
Mode 19 : Pneumatique selon le mode 16 dans lequel le groupe saturé est un méthanediyle.
Mode 20 : Pneumatique selon l'un quelconque des modes 16 à 19 dans lequel le substituant est un alkyle ayant 1 à 3 atomes de carbone.
Mode 21 : Pneumatique selon le mode 20 dans lequel le substituant est méthyle ou éthyle.
Mode 22 : Pneumatique selon l'un quelconque des modes 15 à 21 dans lequel le noyau benzénique est substitué en ortho du dipôle.
Mode 23 : Pneumatique selon le mode 12 ou le mode 13 dans lequel l'agent de modification est le composé 1,3-dipolaire de formule (III-a) ou le composé de formule (III-b). 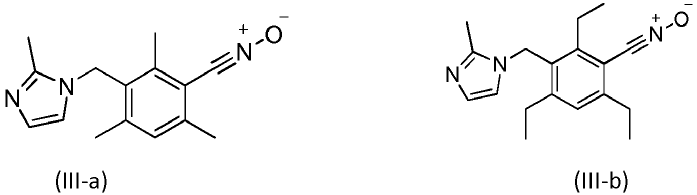
Mode 24 : Pneumatique selon l'un quelconque des modes 1 à 23 dans lequel la silice représente plus de 50% en masse de la charge renforçante.
Mode 25 : Pneumatique selon l'un quelconque des modes 1 à 24 dans lequel le taux de charge renforçante dans la composition de caoutchouc varie dans un domaine allant de 25 à 80 pce.
Mode 26 : Pneumatique selon le mode 25 dans lequel le taux de charge renforçante dans la composition de caoutchouc est de 30 à 70 pce.
Mode 27 : Pneumatique selon le mode 26 dans lequel le taux de charge renforçante dans la composition de caoutchouc est de 35 à 60 pce, mieux de 40 à 55 pce.
Mode 28 : Pneumatique selon l'un quelconque des modes 1 à 27 dans lequel le système de vulcanisation contient un taux de soufre inférieur ou égal à 4 pce.
Mode 29 : Pneumatique selon l'un quelconque des modes 1 à 28 dans lequel le polyisoprène modifié est présent dans la composition de caoutchouc à un taux supérieur à 50 pce, préférentiellement supérieur à 80 pce.
Mode 30 : Pneumatique selon l'une quelconque des revendications 1 à 29 dans lequel le taux de noir de carbone dans la charge renforçante est inférieur à 10 pce, de préférence inférieur à 5 pce.
Mode 31 : Pneumatique selon l'un quelconque des modes 1 à 30 dans lequel le composant caoutchouteux est adjacent, en particulier attenant, à l'armature de carcasse ou à l'armature de sommet.
Mode 32 : Pneumatique selon l'une quelconque des revendications 1 à 31 dans lequel le composant caoutchouteux est un insert annulaire interne présent dans chacun des bourrelets.

L'invention concerne donc un pneumatique défini précédemment, qu'il soit à l'état cru (avant vulcanisation) ou à l'état cuit (après vulcanisation).

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des compositions de caoutchouc :

Les compositions de caoutchouc C01 et C02 sont préparées. Leur formulation est donnée dans le tableau 1.

Dans le cas de la composition de caoutchouc C01, on procède, pour la fabrication de ces compositions, de la manière suivante : on introduit dans un mélangeur interne (taux de remplissage final : environ 70% en volume), dont la température initiale de cuve est d'environ 110°C, le polyisoprène, puis la charge renforçante, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

La composition ainsi obtenue est ensuite calandrée, soit sous forme de plaques (d'une épaisseur allant de 2 à 3 mm) ou fines feuilles de caoutchouc, pour la mesure de ses propriétés physiques ou mécaniques ou pour être utilisée comme armature de renforcement pour pneumatique.

Dans le cas de la composition de caoutchouc C02, on procède comme mentionné pour la composition C01 si ce n'est qu'avant d'introduire la charge renforçante, on introduit le composé 1,3-dipolaire qui est malaxé seul avec le polyisoprène pendant 1 à 2 minutes à 110°C, ce qui permet de fonctionnaliser le polyisoprène avec des groupes pendants de formule (I) avant d'introduire les autres ingrédients de la composition de caoutchouc. Le taux de composé 1,3-dipolaire introduit dans le mélangeur interne pour fonctionnaliser le polyisoprène avant l'introduction des autres ingrédients de la composition de caoutchouc figure dans le tableau 1 et est exprimé en pce. Le taux introduit en pce correspond à un taux molaire de modification de 0,15% exprimé en mole pour 100 moles des unités de répétition du polyisoprène modifié.

La composition de caoutchouc C01 est une composition de caoutchouc de référence, décrite dans la demande de brevet WO 016058945 et destinée à être utilisée dans un insert annulaire interne présent dans chacun des bourrelets et adjacent à l'armature de carcasse.

La composition de caoutchouc C02 est une composition de caoutchouc utile à l'invention, puisqu'elle contient un polyisoprène modifié en ce qu'il porte des fonctions imidazole et une charge renforçante comprenant une charge inorganique renforçante, une silice. Le composé 1,3-dipolaire utilisé pour modifier le polyisoprène est le 2,4,6-triméthyl-3-((2-méthyl-1*H-*imidazol-1-yl)méthyl)benzo-nitrile oxyde de formule (III-a).

### II.2-Résultats :

On mesure les pertes à 60°C des compositions de caoutchouc après un vieillissement des compositions, à 77°C et sous une humidité relative de 40% sous air, pendant une durée de 14 jours puis de 28 jours. Les pertes à 60°C qui traduisent une perte d'énergie à 60°C sont mesurées par rebond à énergie imposée, et mesurée au sixième choc. La valeur, exprimée en %, est la différence entre l'énergie fournie et l'énergie restituée, rapportée à l'énergie fournie. Elles sont exprimés en base 100 par rapport à la valeur de perte mesurée sur la même composition de caoutchouc avant vieillissement. Les résultats figurent dans le tableau 2.

L'évolution des pertes hystérétiques dans le temps est bien moindre pour la composition C02 que pour la composition C01, ce qui traduit un moindre vieillissement par thermooxydation de la composition C02. Par conséquent, le pneumatique comprenant l'insert annulaire de composition C02 présente une endurance améliorée et une durée de vie plus importante que le pneumatique comprenant l'insert annulaire de composition C01.

**Tableau 1**

| Formulation : | C01 | C02 |
|---|---|---|
| Caoutchouc naturel | 100 | 100 |
| Composé 1,3-dipolaire | 0 | 0,57 |
| Silice (1) | 45 | 45 |
| Oxyde de zinc (2) | 4 | 4 |
| Acide stéarique (3) | 1,5 | 1,5 |
| 6PPD (4) | 2 | 2 |
| Silane (5) | 16 | 16 |
| DPG (6) | 1.3 | 1.3 |
| Soufre | 2 | 2 |
| CBS (7) | 1,5 | 1,5 |

| | | |
|---|---|---|
| (1) « Zeosil 1165MP » de la société Rhodia ; (2) Oxyde de zinc de grade industriel - société Umicore ; (3) Stéarine « Pristerene 4931 » de la société Uniqema ; (4) N-(1,3-diméthylbutyl)-N'-phényl-p-phénylènediamine (Santoflex 6-PPD) de la société Flexsys ; (5) Agent de couplage TESPT (« X50S » de la société Orion) ; (6) Diphénylguanidine (« Perkacit » DPG de la société Flexsys) ; (7) N-cyclohexyl-2-benzothiazol-sulfénamide (« Santocure CBS » de la société Flexsys). | | |

**Tableau 2**

| Formulation : | C01 | C02 |
|---|---|---|
| Avant vieillissement | 100 | 100 |
| Après vieillissement 14 jours | 115 | 98 |
| Après vieillissement 21 jours | 129 | 103 |

## Revendications

1. Pneumatique comportant deux bourrelets destinés à entrer en contact avec une jante, un sommet composé d'au moins une armature de sommet et une bande de roulement, deux flancs reliant le sommet aux bourrelets, une armature de carcasse ancrée dans les deux bourrelets, lequel pneumatique comprend un composant caoutchouteux qui comprend une composition de caoutchouc à base d'un polyisoprène modifié, d'un système de vulcanisation et d'une charge renforçante, la charge renforçante comprenant une silice, le polyisoprène modifié étant un polyisoprène qui porte des fonctions imidazoles pendantes, le composant caoutchouteux étant dépourvu d'élément de renfort filaire, ne présentant pas de face visible lorsque le pneumatique n'est pas monté sur une jante externe, et n'étant pas destiné à entrer en contact direct avec une jante.

2. Pneumatique selon la revendication 1 dans lequel la fonction imidazole est un groupe de formule (I) dans laquelle le symbole Y₁ désigne un rattachement à une unité isoprène du polyisoprène modifié, le symbole Y₂ représente un atome d'hydrogène ou un alkyle ayant 1 à 6 atomes de carbone, les symboles Y₃ et Y₄ sont chacun un atome d'hydrogène.

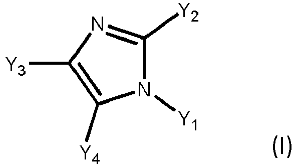

3. Pneumatique selon la revendication 2 dans lequel l'alkyle représenté par Y₂ contient 1 à 3 atomes de carbone, de préférence méthyle.

4. Pneumatique selon l'une quelconque des revendications 1 à 3 dans lequel le taux de fonction imidazole dans le polyisoprène modifié est inférieur à 3% en mole des unités de répétition qui constituent le polyisoprène modifié.

5. Pneumatique selon l'une quelconque des revendications 1 à 4 dans lequel les fonctions imidazoles sont des groupes pendants répartis de façon aléatoire sur le polyisoprène.

6. Pneumatique selon l'une quelconque des revendications 1 à 5 dans lequel le polyisoprène modifié est un polyisoprène modifié par greffage d'un agent de modification sur un polyisoprène contenant plus de 90% en mole d'unité isoprène de configuration 1,4-cis, de préférence sur du caoutchouc naturel.

7. Pneumatique selon la revendication 6 dans lequel l'agent de modification est un composé qui contient une fonction imidazole et un groupe réactif vis-à-vis de doubles liaisons carbone carbone.

8. Pneumatique selon l'une quelconque des revendications 6 à 7 dans lequel l'agent de modification est un composé 1,3-dipolaire qui est un monooxyde de nitrile aromatique, composé comprenant un noyau benzénique substitué par un dipôle oxyde de nitrile et substitué par un groupe contenant une fonction imidazole.

9. Pneumatique selon la revendication 8 dans lequel le composé 1,3-dipolaire contient un motif de formule (II) dans laquelle R₁ représente le dipôle oxyde de nitrile, un des symboles R₂ à R₆ représente un groupe saturé ayant 1 à 6 atomes de carbone et lié de façon covalente à l'un des atomes d'azote du cycle à 5 membres de la fonction imidazole, les autres symboles, identiques ou différents, représentant un atome d'hydrogène ou un substituant.

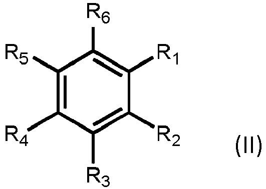

10. Pneumatique selon l'une quelconque des revendications 8 à 9 dans lequel le noyau benzénique est substitué en ortho du dipôle.

11. Pneumatique selon l'une quelconque des revendications 1 à 10 dans lequel la silice représente plus de 50% en masse de la charge renforçante.

12. Pneumatique selon l'une quelconque des revendications 1 à 11 dans lequel le taux de charge renforçante dans la composition de caoutchouc varie dans un domaine allant de 25 à 80 pce.

13. Pneumatique selon l'une quelconque des revendications 1 à 12 dans lequel le système de vulcanisation contient un taux de soufre inférieur ou égal à 4 pce.

14. Pneumatique selon l'une quelconque des revendications 1 à 13 dans lequel le composant caoutchouteux est adjacent, en particulier attenant, à l'armature de carcasse ou à l'armature de sommet.

15. Pneumatique selon l'une quelconque des revendications 1 à 14 dans lequel le composant caoutchouteux est un insert annulaire interne présent dans chacun des bourrelets.

## Patentansprüche

1. Reifen, der zwei Wülste zum In-Kontakt-Bringen mit einer Felge, eine aus mindestens einer Scheitelbewehrung und einer Lauffläche bestehende Laufflächenkrone, zwei die Laufflächenkrone mit den Wülsten verbindende Seitenwände, eine in den beiden Wülsten verankerte Karkassenbewehrung umfasst, wobei der Reifen eine Kautschukkomponente umfasst, die eine Kautschukzusammensetzung auf der Basis eines modifizierten Polyisoprens, eines Vulkanisationssystems und eines verstärkenden Füllstoffs umfasst, wobei der verstärkende Füllstoff ein Siliciumdioxid umfasst, es sich beim modifizierten Polyisopren um ein Polyisopren handelt, das seitenständige Imidazolfunktionen trägt, die Kautschukkomponente frei von einem Filamentverstärkungselement ist, keine sichtbare Fläche aufweist, wenn der Reifen nicht an einer externen Felge montiert ist, und nicht dazu vorgesehen ist, in direkten Kontakt mit einer Felge zu gelangen.

2. Reifen nach Anspruch 1, wobei die Imidazolfunktion eine Gruppe der Formel (I) ist, wobei das Symbol Y₁ eine Bindung an eine Isopreneinheit des modifzierten Polyisoprens bezeichnet, das Symbol Y₂ ein Wasserstoffatom oder ein Alkyl mit 1 bis 6 Kohlenstoffatomen darstellt, die Symbole Y₃ und Y₄ jeweils ein Wasserstoffatom sind

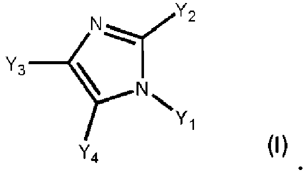

3. Reifen nach Anspruch 2, wobei das durch Y₂ veranschaulichte Alkyl 1 bis 3 Kohlenstoffatome, vorzugsweise Methyl, enthält.

4. Reifen nach einem der Ansprüche 1 bis 3, wobei der Gehalt der Imidazolfunktion im modifizierten Polyisopren weniger als 3 Mol-% der das modifizierte Polyisopren bildenden Repetiereinheiten beträgt.

5. Reifen nach einem der Ansprüche 1 bis 4, wobei es sich bei den Imidazolfunktionen um seitenständige Gruppen handelt, die am Polyisopren statistisch verteilt sind.

6. Reifen nach einem der Ansprüche 1 bis 5, wobei es sich beim modifizierten Polyisopren um ein Polyisopren handelt, das durch eine Pfropfung eines Modifizierungsmittels an ein Polyisopren, das mehr als 90 Mol-% einer Isopreneinheit der 1,4-cis-Konfiguration enthält, vorzugsweise an Naturkautschuk, modifiziert ist.

7. Reifen nach Anspruch 6, wobei es sich beim Modifizierungsmittel um eine Verbindung handelt, die eine Imidazolfunktion und eine gegenüber Kohlenstoff-Kohlenstoff-Doppelbindungen reaktive Gruppe enthält.

8. Reifen nach einem der Ansprüche 6 bis 7, wobei es sich beim Modifizierungsmittel um eine 1,3-dipolare Verbindung handelt, die ein aromatisches Nitrilmonoxid, eine Verbindung, die einen Benzolring umfasst, der durch einen Nitriloxiddipol substituiert ist und durch eine eine Imidazolfunktion enthaltende Gruppe substituiert ist.

9. Reifen nach Anspruch 8, wobei die 1,3-dipolare Verbindung eine Einheit der Formel (II) enthält, wobei R₁ den Nitriloxiddipol darstellt, eines der Symbole R₂ bis R₆ eine gesättigte Gruppe mit 1 bis 6 Kohlenstoffatomen darstellt und die an einem der Stickstoffatome des 5-gliedrigen Rings der Imidazolfunktion kovalent gebunden ist, wobei die anderen Symbole, die identisch oder verschieden sind, ein Wasserstoffatom oder einen Substituenten darstellen

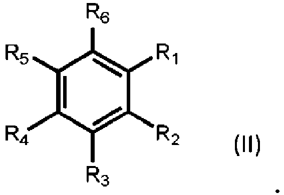

10. Reifen nach einem der Ansprüche 8 bis 9, wobei der Benzolring in der ortho-Position zum Dipol substituiert ist.

11. Reifen nach einem der Ansprüche 1 bis 10, wobei das Siliciumdioxid mehr als 50 Gew.-% des verstärkenden Füllstoffs darstellt.

12. Reifen nach einem der Ansprüche 1 bis 11, wobei der Gehalt des verstärkenden Füllstoffs in der Kautschukzusammensetzung in einem Bereich von 25 bis 80 phr variiert.

13. Reifen nach einem der Ansprüche 1 bis 12, wobei das Vulkanisationssystem einen Schwefelgehalt von weniger als oder gleich 4 phr aufweist.

14. Reifen nach einem der Ansprüche 1 bis 13, wobei sich die Kautschukkomponente nahe, insbesondere angrenzend an der Karkassenverstärkung oder der Scheitelbewehrung befindet.

15. Reifen nach einem der Ansprüche 1 bis 14, wobei die Kautschukkomponente ein innerer ringförmiger Einsatz ist, der in jedem der Wülste vorliegt.

## Claims

1. Tyre comprising two beads intended to come into contact with a wheel rim, a crown composed of at least one crown reinforcement and a tread, two sidewalls connecting the crown to the beads, a carcass reinforcement anchored in the two beads, which tyre comprises a rubber component which comprises a rubber composition based on a modified polyisoprene, a vulcanization system and a reinforcing filler, the reinforcing filler comprising a silica, the modified polyisoprene being a polyisoprene which bears pendent imidazole functions, the rubber component being devoid of a filamentary reinforcing element, having no visible face when the tyre is not fitted onto an external wheel rim, and not being intended to come into direct contact with a wheel rim.

2. Tyre according to Claim 1, in which the imidazole function is a group of formula (I) in which the symbol Y₁ denotes an attachment to an isoprene unit of the modified polyisoprene, the symbol Y₂ represents a hydrogen atom or an alkyl having 1 to 6 atoms of carbon, and the symbols Y₃ and Y₄ are each a hydrogen atom.

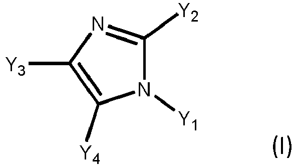

3. Tyre according to Claim 2, in which the alkyl represented by Y₂ contains 1 to 3 carbon atoms, preferably methyl.

4. Tyre according to any one of Claims 1 to 3, in which the imidazole function content in the modified polyisoprene is less than 3 mol% of the repeating units which constitute the modified polyisoprene.

5. Tyre according to any one of Claims 1 to 4, in which the imidazole functions are pendent groups distributed randomly on the polyisoprene.

6. Tyre according to any one of Claims 1 to 5, in which the modified polyisoprene is a polyisoprene modified by grafting a modifying agent onto a polyisoprene containing more than 90 mol% of isoprene unit of 1,4-cis configuration, preferably onto natural rubber.

7. Tyre according to Claim 6, in which the modifying agent is a compound which contains an imidazole function and a group that is reactive with respect to carbon-carbon double bonds.

8. Tyre according to either one of Claims 6 and 7, in which the modifying agent is a 1,3-dipolar compound which is an aromatic nitrile monoxide, a compound comprising a benzene ring substituted with a nitrile oxide dipole and substituted with a group containing an imidazole function.

9. Tyre according to Claim 8, in which the 1,3-dipolar compound contains an entity of formula (II) in which R₁ represents the nitrile oxide dipole, one of the symbols R₂ to R₆ represents a saturated group having 1 to 6 carbon atoms and covalently bonded to one of the nitrogen atoms of the 5-membered ring of the imidazole function, the other symbols, which may be identical or different, representing a hydrogen atom or a substituent.

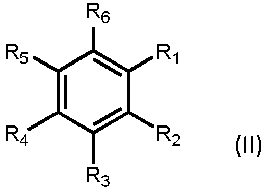

10. Tyre according to either one of Claims 8 and 9, in which the benzene ring is substituted in the position ortho to the dipole.

11. Tyre according to any one of Claims 1 to 10, in which the silica represents more than 50% by weight of the reinforcing filler.

12. Tyre according to any one of Claims 1 to 11, in which the reinforcing filler content in the rubber composition varies in a range extending from 25 to 80 phr.

13. Tyre according to any one of Claims 1 and 12, in which the vulcanization system contains a sulfur content of less than or equal to 4 phr.

14. Tyre according to any one of Claims 1 to 13, in which the rubber component is adjacent to, in particular adjoining, the carcass reinforcement or the crown reinforcement.

15. Tyre according to any one of Claims 1 to 14, in which the rubber component is an internal annular insert present in each of the beads.
